# EUROPEAN PATENT SPECIFICATION

(11) **EP 0 694 593 B1**
(45) Date of publication and mention of the grant of the patent: **05.06.2002**
(21) Application number: 94500142.8
(22) Date of filing: 08.08.1994
(51) Int. Cl.: C09D 5/08, C23C 22/06

(54) **Anticorrosive composition free from sexvalent chromium**
Korrosionsschutz-Zusammensetzung kein sechswertiger Chrom enthaltend
Composition anticorrosion exempte de chrome hexavalent

(30) Priority: 29.07.1994 ES 9401688
(43) Date of publication of application: 31.01.1996
(73) Proprietor: PROCOAT, S.L., 08190 San Cugat Del Valles (Barcelona) (ES)
(72) Inventor: Rodellas Sola, Federico, E-08190 San cugat del Valles (Barcelona) (ES); Conde Morales, Luis, E-08190 San Cugat Del Valles (Barcelona) (ES)
(74) Representative: Alonso Langle, Emilio

(56) References cited:
- EP-A- 0 035 316
- DE-A- 1 521 715
- FR-A- 2 255 393
- GB-A- 2 059 445
- DATABASE WPI Section Ch, Week 9304 Derwent Publications Ltd., London, GB; Class L02, AN 93-034157 & SU-A-1 715 765 ( BUILDING CONSTR RES INST) , 29 February 1992
- TIJDSCHRIFT VOOR OPPERVLAKTECHNIEKEN EN CORROSIEBESTRIJDING, vol. 33, no. 6, June 1989 1G106, pages 232-236, XP 000025539 C.A. BOOSE 'CHROMAATVRIJE PASSIVEERLAGEN VOOR ZINC'
- DATABASE WPI Section Ch, Week 8215 Derwent Publications Ltd., London, GB; Class M14, AN 82-30092E & JP-A-57 041 376 ( RASA KOGYO KK) , 8 March 1982

## Description

### OBJECT OF THE INVENTION

The invention refers to an anticorrosive compound of the "no rinse" type without hexavalent chrome suitable to protect metallic surfaces to adequate them for subsequent treatments.

### BACKGROUND OF THE INVENTION

The growing durability, low maintenance and excellent outlook needs for all kinds of metallic products, and especially steel products which are very sensitive to corrosion, have led to a considerable increase in the use of coatings for steel made of zinc and zinc alloys.

Thus, finished steel elements, but also those semi-manufactured goods such as plates, wires or tubes are subject to processes that apply a zinc-rich alloy coating through their immersion in a depositing bath - an operation which is called galvanization - or by means of an electrodeposition in a bath containing salts of zinc and other metals.

Due to their shape, i.e. plate, wire and tube, all these elements are very suitable for receiving a continuous mill treatment.

These zinc-plating continuous facilities, irrespective of the technique employed -tube, wire or plate- and especially those employed for plates, which is the most important semi-manufactured product undergone final stages where the treatments to protect and adequate the metal surface for its subsequent use are implemented. The zinc-rich outer surface should also be protected against corrosion by lubricating it through the use of protecting oils, depending on the case.

Due to the increase in the market share of zinc-plated steels, both in the construction and the automobile industries, different compositions and treatments have been formulated seeking to enhance the anticorrosive resistance and the paintability of the product, i.e., a good adherence of paints or organic coatings to the zinc-rich outer surface.

In the case of steel plates, the steel which is coated with zinc or zinc alloys such as zinc-aluminum, zinc-nickel or zinc-iron can be treated with that chemical compounds on the continuous mill, either at the hot-dip galvanizing mill or at the zinc-plating mill, or even at independent mills, but always a continuous mill technique at high speeds.

### STATE OF THE ART

It is Known in the State of the Art the solution given in the patent SU 1715765 A1, where is described a method in the area of construction of materials and is destined for use as a protective coating for metals, in that method a very diluted acids are used which are counteracted by presence of oxides, hydroxides and carbonates of calcium and Zinc. In fact Zinc carbonate is decomposed and carbon dioxide is released thus giving a foam which renders the final product unuseful. Calcium and Zinc are divalent cations instead of polyvalent cations. Then in the present invention polyvalent cations are used and it is not used nitric acid.

Until present, inorganic compounds, inorganic and organic mixtures and double coats implementing both techniques have been indifferently used for the passivation and preparation of zinc- and zinc-alloy plated steel. Those compounds relying only on inorganic elements, and which are mainly based on chromate containing compounds, are well known in the industry, and correspond, for instance, in U.S. Patent No. 3,063,877 and other patents.

Since they are mixed compounds, the inorganic component is also essentially a mixture of chromates and phosphates, and the organic one is usually formed by polymers in dispersion or in a water solution, usually of an acrylic nature. Among the different examples, it is worth mentioning U.S. Patents Nos. 3,185,596 and 4,006.041, as well as French Patent No. 1-154,580.

The presence of the polymer provides new qualities to the film, such as the oil-free shaping capability, endurance to fingerprints, dustless operation of press and a greater resistance to corrosion.

Among the most representative examples of double coatings, GB Patents Nos. 2.096.488, 2.147.826, 2.195.560 and 89-28757.7 should be mentioned. They are essentially prepared by means of two layers consecutively applied, already without an intermediate rinsing, but in two stages. During the first stage, a product rich in Hexavalent-chrome is applied, and during the second one, a sealing coating formed by epoxy resins or highly chemically inert polyurethane is applied.

Polymer-based treatments of the metallic surface, with a film thickness ranging between 0,5-5 µm have proven to be efficient when applied to metal plates, as far as treatment and processing of zinc- or zinc alloy-coated plates.

As it can be observed, all the old passivators contain chromic acid or chromates, i.e. hexavalent Cr which presents a high toxicity index and is a proven carcinogenic chemical. Furthermore, during recycling operations, those metals treated with this compounds can release Hexavalent Chrome with the subsequent risks it implies, due to its solubility in water. Also, during stressing and welding operations, these metals can release hexavalent chrome.

Despite of the risk implied by hexavalent chrome, there are not available nowadays other passivating compounds which are protective enough and that provide a good quality subsequent painting process. The self-passivating and inhibiting nature of hexavalent chrome provides them a high standard of quality, in accordance with the strict industry requirements, especially those of construction and automobile industries.

Thus, U.S. Patent No. 4.298.404 describes a series of hexavalent chrome-free passivating agents, but the protection achieved does not exceed 36 hours during the tests carried out at the saline mist chamber, according to ASTM-B-117, applied to the zinc-plated surfaces.

British patent 1.193.459 describes different compositions based on trivalent chrome, titanium, zirconium, silica and oxidizers. However, all these compounds do not pass a 36-hour test according to ASTM-B-117. They do not use phosphates nor phosphoric acid specifically.

The use of titanium salts, tetrachloride Potassium oxalate and titanium or sulphate with an oxidizing agent such as oxygenated water and sulphuric acid was presented in 1989 by C.A. Boose, of the TNO (Netherlands), in the "Tjdschrift voor oppervlakte-technieken und corrosivebestrijden" magazine (33) 1989, No. 6, p. 232.

Neither the bibliography of this article, nor our search has detected specific patents dealing with the association of oxygenated water and titanium. Fluotitanic acid and its salts are neither covered.

Dutch patent No. 77 09 404 describes an alternative procedure that uses trivalent chrome, sulphuric acid and oxygenated water; the document does not provide information on data regarding tests carried out inside a saline mist chamber, but the testing time does not reach the 24-hour testing performed by the inventor hereof.

The little corrosion protection achieved by these inorganic procedures without hexavalent chrome is widely acknowledged by the technical literature and the patents published. At industrial level, this lack of efficiency has entailed a lack of market penetration.

The efficiency of these treatments based on hexavalent chrome can be enhanced of, after rinsing the byproducts from the passivation reactions, a polymer lacquer of a few microns thickness is applied. But the 2-stage treatment, or passivation plus lacquering, requires an intermediate rinsing and drying and cannot be applied for existing facilities, requiring large investments and consumption of water and energy. Cfr. the above mentioned article by Mr. C. A. Boose.

Ordinary chrome-free passivation systems require the use of different reactives. These have to react with the metal surface, and their by-products have to be rinsed with water to provide the procedure the efficiency desired. This has been explicitly described in US Patent No. 4.298.404, and it is understood in most cases.

It seems evident that a treatment with a bath containing both polymers and metal passivating reactives cannot be rinsed since the polymer would be lost before curing the resin. Furthermore, resin curing retains in the surface of the metal the byproducts from the passivation reaction.

On the other hand, rinsing implies specific facilities, water consumption, which sometimes must be hot water, and the use of metal salts not intended for industrial spillage. Therefore, such water has to be processed at water purifying plants, with the investment it entails.

Until now, the association of emulsified or solved polymer films has not been tried in the same bath containing weak passivants such as aluminum, calcium cerium, cobalt, trivalent chrome, molybdenum, silica, vanadium, zirconium, titanium and zinc in the same processing bath.

### DETAILED DESCRIPTION OF THE INVENTION

The present invention describes a series of compounds totally free of hexavalent chrome, with high anti-corrosion values and which are able to receive afterwards a high-quality paint, that can be applied to zinc- and zinc alloy-coated steel in a high speed continuous mill using the equipments existing at this lines, such as squeezing rollers. This last feature is essential to enable them to be used at any roll without the need for any investment in roll-coaters or chem-coaters that, in many cases, cannot be adapted due to the lack of space.

These compounds are made of four basic products:
i) at least a co-polymer in dispersion or water solution.
ii) at least a complex cation or anion within the aluminum, calcium, cerium, cobalt, molybdenum, silicon, vanadium, zirconium, titanium, trivalent chrome, zinc group.
iii) an oxidizer and
iv) acids to adjust the pH, like sulphuric, oxalic, boric, phosphoric, nitric, acetic acids.

The polymer will supply those qualities of enhancement of the endurance to corrosion and paintability and resistance to fingerprints, powdering and slipperiness qualities, as well as the no rinse character and its adaptability to the lines working with drying rolls.

The remaining compounds contribute basically to the anticorrosive protection of metal and synergizes with all the properties of the polymer.

The polymeric emulsions available in the market rarely have the stability needed to be mixed and to be stable enough with relatively high contents of polyvalent cation salts, strong acids and oxidizers, like the proposed passivant solutions. The normal use of these solutions do not require these characteristics. It has been necessary, to implement this invention, to develop special polymeric emulsions.

To make compatible salts, acids and oxidizers with emulsions or solutions of polymer in water requires a high degree of specialisation, apart from knowledge on colloids, emulsifiers and polymers, but can be achieved by any expert in this field who so wishes, since there are different solutions for this problem available.

The key characteristic of this patent lies in the fact that the use of emulsions of organic macromolecular products emulsified or solved (co-polymers or polymers) mixed with several cations and oxidizers of little efficiency. However, the mixing of these polymer emulsions or solutions does not only provide the advantages acknowledged in industrial polymer-containing surface coatings (self-lubricated for embossing or profiling, protection against fingerprints, etc) but also an unexpected improvement of its anti-corrosion efficiency. The proposed association of polymer emulsions or solutions, laid in thin layers (0,5-5 µm) and passivant systems (scarcely efficient, as it can be seen in the prior art) with little environmental influence used in the same bath, leads to new products with new favourable and unforeseen technical properties.

As it is widely known, we have nowadays a great variety of chemical macromolecular structures or combinations of structures ranging from high molecular weight waxes to resins, polymers and copolymers. many different curing systems are also known, which can result in thin polymer films.

As far as this patent is concerned, it is considered to be relevant those solutions, pseudo-solutions and emulsions in water media of organic polymeric products meeting the following additional conditions.
- a film formed by a 1 micron thick polymer, cured from 80º to 200º C during a few minutes should neither loss nor gain more than 20% of the weight of the original film after four consecutive 24-hour immersions in plain water at room temperature.
- minimum stability of 2 months inside a space heater at 40º C after an addition of phosphoric acid at 75%, pH 1. i.e., an absence of coagulation and precipitation or gelation of the solution or emulsion.
- minimum stability of 2 months inside a space heater at 40º C after an addition of 6% in weight of chrome trichloride hexahydrate (Merck analysis reactive). Absence of coagulation, gelation or precipitation.
- minimum stability of 48 hours at less than 40º C in the presence of a 7.9% in weight of oxygen peroxide.
- 0.5 to 8% of the monomeric units present in the macromolecules used with chemical functions able to react with, or to form complex metal cations. The best known and more common chemical functions with this capability are as follows:
- Free carboxyl groups, or neutralised with ammonia, amines or amides.
- Urethane groups provoked by the reaction of isocyanate groups with alcohols, anhydride alcohols and/or epoxy groups.
- Groups provoked by the reaction of isocyanate groups and amine, amide or imine groups.
- Hydroxy groups, especially when there are substituents of the primary, secondary or tertiary amine types, as they are generated by the reaction of epoxy amide or amine groups.

Without thinking that the theoretical construction, be it correct or not, might limit the scope of this patent, it is understood that the compound-generating capability and that of reaction with the polyvalent cations that can be used as metal passivants is multiplied by the effect of the following mechanisms:
- polyvalent cations react with the polymer, increasing its mechanical and chemical resistance.
- the adherence of the organic-inorganic film to the metal surface is increased.
- the cations present in the composition get substantially insoluble, which has a twofold effect: the stability of the film against wet and anti-corrosive agents is enhanced, and the cation rinsing operation, that could be harmful for the environment, is eliminated.
- a reserve of passivant cations is established close to the metal surface. This has a local protective effect in that areas where the organic-inorganic film can be mechanically damaged.
- in the present stage of development, the best results have been obtained with acrylic, vinylic or styrene-butadiene and styrene-butadiene-acrylonitrile emulsions. However, emulsions or solutions containing compounds with a high molecular weight have also presented technically acceptable results.

Among the well known cations producing a passivant effect on zinc, aluminum and their alloys, those with a high and stable valence - generally, 3 and 4 - should be preferred. This enables to take advantage from the polymer-passivant cation synergy found.

On the other hand, the knowledge base regarding the effects of chemical compounds and metal cations on the health and the environment is continuously progressing, and only those elements or cations used widely and since a long time ago can warrant that negative effects will not be discovered.

In this sense, aluminum and trivalent chrome should be preferred to more unusual cations, the long term effect of which is worst known currently.

Especially, the best combination of anti-corrosive protection and environmental safety has been found on systems containing trivalent chrome and titanium, either alone or associated, either between them or with the remaining associated elements mentioned above.

On the other hand, vanadium (metavanadates) molybdenum (molybdates and oxomolybdates), cerium, cobalt, zirconium (acetate) salts, when combined with polymers with the adequate properties, and in the light of the toxicological research are safe.

It should be also highlighted that the eventual supply of cations from the treated surface to the environment, as a consequence of its use, is very limited due to the polymer-cation reaction, favoured by the described polymers and the selected cations.

Most corrosion protection systems through passivation require an oxidant. In some cases of natural passivation or in systems where the oxidizer is not expressly mentioned, this function uses to be supplied by atmosphere air.

The use of very strong oxidizers, like chromic acid and traditional chromates is also a prior art, but there are also references to the use of nitric acid, perchloric acid, hydrogen peroxide and inorganic peroxides. Organic peroxides have not been proposed, due to their explosion risks and their costs, but there are other oxidizing organic compounds.

Hydrogen peroxide at concentrations lower than 8% presents the most advantageous combination as far as toxicity, void environmental effect and stability are concerned. While hydrogen peroxide in inorganic passivant systems is mentioned in the prior art, the association of hydrogen peroxide diluted with organic macromoleculae emulsions or solutions is a novelty, especially for metal passivation or protection.

Within the prior art, the general practice is to use pH lower than 5 for passivation. However, it is possible to passivate zinc and zinc alloys at higher pHs, up to a value of 11.

All this practice belongs to the prior art. However, the following acids should be mentioned as preferable for reducing the pH to the desired level, taking into consideration environmental and toxicological factors, as well as the anti-corrosion efficiency of the proposed compounds: acetic, sulphuric, phosphoric, oxalic, boric, chlorhydric and fluorhydric acids.

The novelty of this invention is the fact of introducing solved or dispersed polymers in mixtures incorporating cations and oxidizers. In fact, it was already known that compounds containing the cations and oxidizers mentioned in this invention protected metal surfaces, especially those made of zinc and aluminum. However, the incorporation of organic polymers dispersed or solved represents a novelty since the anticorrosive qualities increase between 3 to 10 times compared with those previously mentioned the effects of which are well known.

As complementary additives the following could be mentioned:
A. Water-emulsifiable waxes of the type polyolefinic or montanic to increase the lubrificant effect for shaping operations without the need to use oil. The industry increasingly tends to eliminate the use of embossing oils due to the pollution they cause and the difficulties that their elimination entails in conventional degreasing baths. It can often happen that traces of such oils remain in the porosities of zinc-coated steels, later on causing cratering problems in the paint films. On the other hand, the dirtiness entailed by the use of such oils and its environmental dust adherence are evident. It is very useful to make an adjustment of coefficient of friction the with small quantities of waxes.
   These compounds, due to their anticorrosive properties, will also avoid the use of antioxidant oils normally used in the steel industry, while guaranteeing the absence of corrosion during their storage and transportation. Furthermore, the coefficients of friction offer a greater easiness and quickness of the embossing process thus obtaining sharper edges since the zinc loss is minimized.
B.- Copolymer soluble organic pigments. The presence of the pigment is feasible thanks to the fact that the polymer can firmly fix it. These pigments enable to obtain new transparent and coloured finishings, very attractive, or to offer a finishing that completely covers the surface. Some pigments divided in fine particles will enhance the weldability.
   It has been proven that these compounds offer a great anticorrosive protection not only to the zinc and its alloys but also to the aluminum and its alloys. Furthermore, the aluminum incorporates qualities such as paintability, slipperiness and resistance to fingerprints.

These compounds are applied to metal surfaces in thin layers of 0,5 to 5,0 gr/m2. The weldability decreases and the incorporation of pigments such as lampblack, iron oxide and particles with a metallic effect is very useful.

When this weldability requirement is not needed, thicker layers of up to 20 microns can be used. In such a case, the use of additional pigments non-soluble in copolymers is feasible and the metal surface can be optimally coated.

The application of these compounds to continuous galvanizing mills should enable the use of squeezing rollers usually available in these facilities.

Furthermore, these compounds should be applied by means of roll-coaters or chem-coaters.

Among the materials that can be continuously treated by means of these compounds we could mention steel wire and tube coated with zinc and its alloys and with aluminum and its alloys.

These formulae are also valid - apart from its continuous application on materials - for single pieces to be treated through hot dip or metallizing gun, electrostatic or of another type. In this case, it is advisable to apply such compounds on a hot surface to avoid drops and excesses. The use of a gun is also advisable in the case of thicker layers.

From the above it can be deduced that these compounds are of a no-rinse type and all their components should not adversely affect the coating qualities since they will form part of such coating. This is a critical quality to reduce water consumption, to avoid the pollution of water and due to its extremely easy operation since it is a one-step process.

### EXAMPLE 1

We prepare an emulsion of acrylic copolymers with an emulgent, non-ionic, colloid, protector, conventional redox catalyst in plain water at 70ºC with a mixture of monomers containing methacrylic acid, methyl methacrylate, ethyl acrylate, acrylamide methylol, methacrylate hydroxyalkyl, etc. The mixture is maintained at 70ºC for 2 hours. Then it is cooled by agitation and poured. The product obtained is "A Polymer".

### EXAMPLE 2

The quantity of polyamide hardener recommended by the manufacturer is added to a water emulsion of commercial epoxy resin.

The hardener is added mixed with 16 additional parts of de-ionized water.

This mixture is prepared right before the use of the product since it has a limited pot-life.

This polymer is called "B Polymer".

### EXAMPLE 3

An emulsion of styrene-butadiene stable against salts and acids is prepared with 2-6% of carboxyl monomeric groups which is called "D Polymer".

### EXAMPLE 4

We prepare a stable solution of trivalent chrome phosphate by reducing the chromic acid. For this purpose, 90 parts of phosphoric acid (at 75% in water) are mixed with 100 parts of deionized water. The mixture is solved with 20 parts of chrome trioxide in flakes.

The solution is heated at 65º C and methanol is slowly poured drop by drop, under agitation. This provokes a very quick boiling reaction with a rise of temperature. The addition rate is adjusted to obtain a stable boiling. The temperature rises slowly and is controlled by means of external refrigeration, working with a return line by condensation backflow of the steam produced. The addition of some 5 parts of methanol is enough for the quantities mentioned above.

This totally reduced solution is allowed to cool and settle for 24 hours, and in the following examples, it will be called "P" Solution.

### EXAMPLE 5

Potassium-titanium oxide oxalate hydrate is solved in deionized water. The presence of 12% hydrogen peroxide in the deionized water allows a cold solubility of 25%. In the following examples, it will be called "T" Solution.

### EXAMPLE 6

3 parts of hydrogen peroxide at 35% and 5.9 parts of "P" solution, according to example 4, mixed to obtain 100 parts of final solution of deionized water are used to treat dip-plated steel plates, in a manner analogous to example 6. The resistance in a saline mist chamber, according to ASTM tests, is lower than 16 hours.

A solution of the same compound plus the addition of 15 parts of "A" Polymer according to example 1 and applied following the same technique, i.e., 5" immersion and immediate drying at 100º C. This same material has a resistance to the test carried out at the saline mist chamber of more than 72 hours.

A solution containing only 15 parts of A polymer in water, without the 2% of P solution offers again a resistance lower than 16 hours during the test carried out in the saline mist chamber.

A solution containing A polymer and the P solution, but neither hydrogen peroxide nor any other organic peroxide, presents a resistance to corrosion in the saline mist chamber of ca. 24 hours.

The panels containing polymer have an organic layer of approximately 1 micron.

### EXAMPLE 7

100 parts of a water solution containing 15 parts of D polymer and 5 parts of P solution, 2 parts of H2O2 and 0,3 parts of polyethylenic wax emulsion are prepared and a series of steel Galvan-coated panels (95% zinc and 5% aluminum alloy applied by means of hot dip galvanizing) are treated with such compound. The application by immersion followed by a drying at 100ºC gives a result of 300 hours according to the ASTM tests inside the saline mist chamber up to the first evidences of white corrosion. The 1 micron film applied enables the dry profiling of the plate thus obtained.

A similar result is obtained on a place with a 55% aluminum and 45% zinc alloy applied by means of hot dip galvanizing.

It should be highlighted that the surface is protected against any fingerprints and presents a good adherence for most of the paints available in the market.

### EXAMPLE 8

A de-mineralized water bath is prepared with the A resin containing 10 parts of the T solution, 0,75 parts of phosphoric acid at 75% and 2% of hydrogen peroxide plus 1,5% of a colloidal silica emulsion with particles of 7 to 12 mµm.

This compound is gently agitated. After an application by immersion and drying at 130ºC, a zinc-plated plate offers a resistance to corrosion of 96 hours according to the ASTM test inside the saline mist chamber. The metal surface is covered by a polymer film of properties similar to those of example 9.

### EXAMPLE 9

100 parts of a de-mineralized water solution containing 15 parts of B copolymer recently prepared according to example 2, 10 parts of T solution according to example 5, 2 parts of hydrogen peroxide and 1 part of phosphoric acid at 75% are prepared. The mixture is prepared by gentle additions under intense agitation.

This solution is used to treat zinc-plated steel plates by immersion and drying at 103ºC. Then they are allowed to settle for 24 hours and subsequently it is subject to a corrosion test inside the saline mist chamber, according to the ASTM b-117 test, exceeding 120 hours.

## Claims

1. An anticorrosive water-based composition for use in the protection of metallic surfaces, consisting of:
i) at least, an aqueous solution or dispersion of a polymer or a copolymer, said polymer or copolymer having between 0.5% to 8% of monomeric units with functional groups which can react or form complexes with metallic cations, said aqueous solution or dispersion of said polymer or copolymer being stable for:
(a) at least, two months at 40°C in the presence of phosphoric acid up to pH 1;
(b) at least, two months at 40°C in the presence of 6% by weight of chromium trichloride hexahydrate; and
(c) at least, 48 hours at a temperature lower than 40°C in the presence of 7.9% by weight of hydrogen peroxide;
ii) at least, a water-soluble cationic or anionic complex containing a cation from a metal selected from the group consisting of aluminum, cerium, cobalt, trivalent chromium, molybdenum, silicon, vanadium, titanium and zirconium;
iii) an oxidizer selected from the group consisting of perchloric acid, hydrogen peroxide, and the inorganic derivatives thereof; and
iv) at least, an acid selected from the group consisting of acetic acid, boric acid, hydrochloric acid, hydrofluoric acid, oxalic acid, phosphoric acid and sulphuric acid.

2. A composition according to claim 1, wherein said aqueous polymer or copolymer dispersion comprises a water emulsified acrylic polymer or copolymer.

3. A composition according to claim 1, wherein said aqueous polymer or copolymer dispersion comprises a water emulsified epoxy resin.

4. A composition according to claim 1, wherein said aqueous polymer or copolymer dispersion comprises a water emulsified styrene-butadiene copolymer.

5. A composition according to claim 1, wherein said aqueous polymer or copolymer dispersion further comprises a water emulsified wax.

6. A composition according to claim 1, wherein said complex comprises trivalent chromium.

7. A composition according to claim 1, wherein said complex comprises tetravalent titanium.

8. A method for protecting a metallic surface which comprises applying an appropriate amount of an anticorrosive water-based composition according to any one of claims 1 to 7, to deposit a layer between 0.5 and 5 µm on the metallic surface.

9. A method according to claim 8, wherein said metallic surface comprises zinc, aluminum, steel plated with zinc or zinc alloys, and steel plated with aluminum or aluminum alloys.

10. A method according to claim 8, wherein said anti-corrosive composition is applied onto the metallic surface by squeezing rollers, chem coaters, roll coaters, flooding, immersion, or by electrostatic or aerographic spraying.

11. A method according to claim 8, which further comprises the step of drying, at a temperature ranging between 60°C and 200°C, the metallic surface after applying the anticorrosive composition.

## Patentansprüche

1. Wässrige Rostschutzmittelzusammensetzung zur Benutzung im Schutz metallischer Oberflächen, bestehend aus:
i) mindestens einer wässrigen Lösung oder Dispersion eines Polymers oder Copolymers, wobei der genannte Polymer oder Copolymer 0,5 % bis 8 % monomere Einheiten aufweist, mit funktionellen Gruppen, die mit metallischen Kationen reagieren können oder mit diesen Komplexe bilden können, wobei die genannte wässrige Lösung oder Dispersion des genannten Polymers oder Copolymers stabil ist für einen Zeitraum von:
a) mindestens zwei Monaten bei 40° C in Gegenwart einer Phosphorsäure bis zu einem pH von 1;
b) mindestens zwei Monaten bei 40° C in Gegenwart eines sechsfach hydrierten Chromtrichlorids von 6 Gew. %. und
c) mindestens 48 Stunden bei einer Temperatur unter 40° C in Gegenwart eines Wasserstoffperoxids von 7,9 Gew. %;
ii) mindestens einem wasserlöslichen anionischen oder kationischen Komplex, der ein Kation eines Metalls aus der Gruppe bestehend aus Aluminium, Cer, Kobalt, dreiwertigem Chrom, Molibdän, Silizium, Vanadium, Titan und Zirkon enthält;
iii) einem Oxidationsmittel aus der Gruppe bestehend aus Perchlorsäure, Wasserstoffperoxid und anorganischen Derivaten derselben; und
iv) mindestens einer Säure aus der Gruppe bestehend aus Essigsäure, Borsäure, Chlorwasserstoffsäure, Fluorwasserstoffsäure, Oxalsäure, Phosphorsäure und Schwefelsäure.

2. Zusammensetzung nach Anspruch 1, in der die genannte wässrige Dispersion aus einem Polymer oder einem Copolymer einen Acrylpolymer oder copolymer in einer wässrigen Emulsion enthält.

3. Zusammensetzung nach Anspruch 1, in der die genannte wässrige Dispersion aus einem Polymer oder einem Copolymer eine Epoxidharz in einer wässrigen Emulsion enthält.

4. Zusammensetzung nach Anspruch 1, in der die genannte wässrige Dispersion aus einem Polymer oder einem Copolymer ein Styrol-Butadien-Colpolymer in einer wässrigen Emulsion enthält.

5. Zusammensetzung nach Anspruch 1, in der die genannte wässrige Dispersion aus einem Polymer oder einem Copolymer ausserdem ein Wachs in einer wässrigen Emulsion enthält.

6. Zusammensetzung nach Anspruch 1, in der der genannte Komplex dreiwertiges Chrom enthält.

7. Zusammensetzung nach Anspruch 1, in der der genannte Komplex vierwertiges Titan enthält.

8. Verfahren zum Schutz einer metallischen Oberfläche, das die Anwendung einer geeigneten Menge einer wässrigen Rostschutzmittelzusammensetzung nach einer der Ansprüche 1 bis 7 umfasst, um auf einer metallischen Oberfläche eine Schicht von 0,5 bis 5 µm aufzutragen.

9. Verfahren nach Anspruch 8, bei dem die metallische Oberfläche Zink, Aluminium, mit Zink oder Zinklegierungen beschichteten Stahl oder mit Aluminium oder Aluminiumlegierungen beschichteten Stahl enthält.

10. Verfahren nach Anspruch 8, bei dem die genannte Rostschutzmittelzusammensetzung auf die metallische Oberfläche mit Auspressrollen, mit chemischen Beschichtungsmitteln, zylinderförmigen Beschichtungsmitteln, Überflutung, Tauchen oder durch elektrostatische Zerstäubung oder Spritzlackierung aufgetragen wird.

11. Verfahren nach Anspruch 8, das ausserdem eine Trocknungsstufe der metallischen Oberfläche nach Auftragen der Rostschutzmittelzusammensetzung bei einer Temperatur von 60° C bis 200° C umfasst.

## Revendications

1. Composition anticorrosive aqueuse destinée à la protection de surfaces métalliques constituée par :
i) au moins une solution ou dispersion aqueuse d'un polymère ou d'un copolymère, ces derniers présentant entre 0,5 % et 8 % d'unités monomériques avec des groupes fonctionnels qui peuvent réagir ou former des complexes avec des cations métalliques, ladite solution ou dispersion aqueuse dudit polymère ou copolymère étant stable pendant :
a) au moins, deux mois à 40° C en présence d'acide phosphorique jusqu'à un pH de 1;
b) au moins, deux mois à 40° C en présence de trichlorure de chrome hexahydraté à 6 % en poids et
c) au moins, 48 heures à une température inférieure à 40° C en présence de peroxyde d'hydrogène à 7,9 % en poids ;
ii) au moins, un complexe anionique ou cationique soluble dans l'eau contenant un cation d'un métal sélectionné du groupe constitué par de l'aluminium, du cérium, du cobalt, du chrome trivalent, du molybdène, du silicium, du vanadium, du titanium et du zirconium ;
iii) un oxydant sélectionné du groupe constitué par de l'acide perchlorique, du peroxyde d'hydrogène et par leurs dérivés inorganiques et
iv) au moins, un acide sélectionné du groupe constitué par de l'acide acétique, de l'acide borique, de l'acide chlorhydrique, de l'acide fluorhydrique, de l'acide oxalique, de l'acide phosphorique et de l'acide sulfurique.

2. Composition d'après la revendication 1, dans laquelle ladite dispersion de polymère ou de copolymère aqueuse comprend un polymère ou copolymère acrylique en émulsion aqueuse.

3. Composition d'après la revendication 1, dans laquelle ladite dispersion de polymère ou de copolymère aqueuse comprend une résine époxy en émulsion aqueuse.

4. Composition d'après la revendication 1, dans laquelle ladite dispersion de polymère ou de copolymère aqueuse comprend un copolymère de styrène-butadiène en émulsion aqueuse.

5. Composition d'après la revendication 1, dans laquelle ladite dispersion de polymère ou copolymère aqueuse comprend de plus une cire en émulsion aqueuse.

6. Composition d'après la revendication 1, dans laquelle ledit complexe comprend du chrome trivalent.

7. Composition d'après la revendication 1, dans laquelle ledit complexe comprend du titanium tétravalent.

8. Procédé pour la protection d'une surface métallique comprenant l'application d'une quantité appropriée d'une composition anticorrosive aqueuse d'après n'importe laquelle des revendications 1 à 7, afin de déposer une couche comprise entre 0,5 et 5 µm sur la surface métallique.

9. Procédé d'après la revendication 8, dans lequel ladite surface métallique comprend du zinc, de l'aluminium, de l'acier recouvert de zinc ou des alliages de zinc, et de l'acier recouvert d'aluminium ou des alliages d'aluminium.

10. Procédé d'après la revendication 8, dans lequel ladite composition anticorrosive est appliquée sur la surface métallique au moyen de rouleaux exprimeurs, de recouvreurs chimiques, de recouvreurs cylindriques, par inondation, par immersion ou par pulvérisation électrostatique ou aérographique.

11. Procédé d'après la revendication 8 comprenant en plus l'étape de séchage, à une température variant entre 60° C et 200° C, de la surface métallique après l'application de la composition anticorrosive.
